# EUROPÄISCHE PATENTSCHRIFT

(11) **EP 1 090 554 B1**
(45) Veröffentlichungstag und Bekanntmachung des Hinweises auf die Patenterteilung: **23.04.2003**
(21) Anmeldenummer: 00121256.2
(22) Anmeldetag: 04.10.2000
(51) Int. Cl.: A22C 9/00

(54) **Vorrichtung zur Bearbeitung von Fleisch**
Device for treating meat
Dispositif de traitement de pièces de viande

(30) Priorität: 08.10.1999 DE 19948482; 08.10.1999 DE 29917752 U; 07.09.2000 DE 20015545 U; 14.09.2000 DE 10045444
(43) Veröffentlichungstag der Anmeldung: 11.04.2001
(73) Patentinhaber: Kindermann, Franz, 84329 Wurmannsquick (DE)
(72) Erfinder: Kindermann, Franz, 84329 Wurmannsquick (DE)
(74) Vertreter: Rumpler, Wolfgang, Dr.

(56) Entgegenhaltungen:
- EP-A- 0 478 221
- WO-A-94/18842
- DE-A- 3 344 284
- US-A- 4 531 259
- US-A- 4 660 252

## Beschreibung

Die Erfindung betrifft eine Fleischwalze und eine Vorrichtung zum Bearbeiten von Fleischstücken. Die Vorrichtung dient insbesondere zur Mürbung mit gleichzeitiger Flächenvergrößerung von Frischfleisch ohne Knochenanteil im Lebensmittelbereich.

Die Struktur des mit einer derartigen Vorrichtung bearbeiteten Frischfleisches wird nachhaltig verändert bzw. gelockert (gemürbt), und das Fleisch wirkt beim Verzehr zarter und geschmackvoller. Bei Frischfleisch verschiedenster Art, vorwiegend aber Fleisch vom Rind und vom Schwein, wird eine nachhaltige Qualitätsverbesserung erzielt.

Aus der DE-A 33 44 284 ist eine Vorrichtung zur Behandlung von Fleisch oder Schinken bekannt, die mit einem Gestell versehen ist, in dem wenigstens zwei gegenläufig rotierende und auf Abstand nebeneinanderliegende Walzen angeordnet sind, zwischen denen das behandelnde Gut durchgeführt wird. Die Walzen sind als Druckwalzen ausgebildet und deren Abstand ist zueinander einstellbar. Die Druckwalzen können auswechselbar in dem Gestell befestigt sein, wozu jede Druckwalze auf der Antriebsseite über eine Schnellkupplung mit der Antriebswelle verbunden ist und auf der anderen Seite in einer lösbar mit dem Gestell verbundenen Lageranordnung gelagert ist. Die Druckwalzen können auf Ihren Umfangswänden mit Rippen, Noppen, Vorsprüngen oder dergleichen versehen sein. Die sich wenigstens teilweise über die Länge der Druckwalzen erstreckenden Rippen sind im Querschnitt wenigstens annähernd rechteckig, spitz oder stumpfkegelartig. Der Nachteil dieser Fleischbearbeitungsvorrichtung liegt darin, dass die Fleischzellen des bearbeiteten Fleischstücks durch Quetschen derart zerstört werden, dass sehr viel Zellflüssigkeit austritt und dadurch die Lagerfähigkeit des bearbeiteten Fleischstücks stark abnimmt.

Durch den Walzvorgang kommt es zu einer effektiven Oberflächenvergrößerung des bearbeiteten Frischfleisches (z. B. Schnitzelfleisch vom Schwein, Schweinenackensteaks, Schweinelendchen, Rinderlende u.ä.). Durch den Einsatz einer derartigen Walzvorrichtung bleibt das Fleischklopfen per Hand erspart, bei dem das Frischfleisch durch Schlageinwirkung mit dem entsprechenden Arbeitswerkzeug in seiner Konsistenz geplättet wird. Dabei kommt er zu einem massiven Austritt von Zellflüssigkeit. Dieser Zellflüssigkeitsaustritt führt wiederum zu einem verschmutzten Arbeitsplatz und zu einem messbaren Gewichtsverlust beim bearbeiteten Frischfleisch nach dem Fleischklopfen. Geklopftes Frischfleisch trocknet auch leicht aus.

Ein weiterer Vorteil einer Walzvorrichtung gegenüber dem gängigen Fleischklopfen liegt im weitaus geringeren Zeit- und Kraftaufwand und der weitaus körperschonenderen Arbeitsweise bei der Fleischbearbeitung. Die beim gängigen Klopfvorgang, z.T. überbeanspruchten Sehnen und Gelenke der klopfenden Person werden dabei auch geschont

Eine gattungsgemäße Walzvorrichtung ist aus der Druckschrift US 4 660 252 A1 bekannt. Die dort beschriebene Messerrolle umfasst eine Vielzahl scheibenförmiger Messerklingen mit am Umfang liegenden Schneidekanten und einer zentralen Aufnahmeöffnung. Zwischen den Schneideklingen ist ein vorbestimmter Abstand vorgesehen. Die Walzenzähne sind sägezahnförmig mit stumpfer Spitze ausgeführt.

Eine weitere Fleischbearbeitungsvorrichtung ist aus der Druckschrift US 4 531 259 A1 bekannt. Auch diese Vorrichtung weist Messerwalzen auf, durch die ein Stück Fleisch transportiert wird. Die Messerwalzen erzeugen unterbrochene Schnitte in der Oberfläche eines Fleischstücks. Die Messerwalzen bestehen wiederum aus scheibenförmigen Messerklingen, die am Außenumfang Walzenzähne aufweisen. Die Walzenzähne sind ebenfalls sägezahnförmig mit stumpfer Spitze ausgebildet.

Die Aufgabe der vorliegenden Erfindung besteht somit darin, eine Vorrichtung vorzuschlagen, mit der die Mürbung von Fleischstücken wirkungsvoll durchzuführen ist und der Verlust an Zellflüssigkeit bei der Bearbeitung möglichst gering gehalten wird.

Erfindungsgemäß kann diese Aufgabe mit Hilfe einer Fleischwalze gelöst werden, die einen Walzenmantel in der Form eines Zylinders und eine Vielzahl an Walzenzähnen auf der Oberfläche des Walzenmantels, die sich im wesentlichen längs der Achse des Zylinders erstrecken, umfasst, wobei jeder der Vielzahl an Walzenzähnen jeweils eine erste Fläche, die im wesentlichen auf einer Ebene durch die Achse des Zylinders liegt, und eine zweite Fläche, die im wesentlichen senkrecht zu einer ersten Fläche eines in Umfangsrichtung benachbarten Walzenzahns angeordnet ist, aufweist.

Eine erfindungsgemäße Vorrichtung zum Bearbeiten von Fleischstücken umfasst mindestens eine derartige Fleischwalze. Durch die entsprechende Ausbildung der Walzenzähne und dadurch, dass die Walzenzähne nur in einer Richtung gezahnt sind, können sich Fleischstücke nicht festhängen und die Fleischstücke können sich bei der Bearbeitung auch nicht aufstauen. Eine effektive Oberflächenvergrößerung des bearbeiteten Frischfleischstücks kommt ebenfalls durch die eingesetzte Walzenform zustande, da das Walzgut in den Rillen der Walzenzähne auseinander fließen kann.

Die beigefügten Zeichnungen dienen zur näheren Erläuterung der Erfindung. In ihnen zeigen:
Fig. 1 eine perspektivische Ansicht auf eine erfindungsgemäße Vorrichtung;
Fig. 2 eine Seitenansicht der erfindungsgemäßen Vorrichtung;

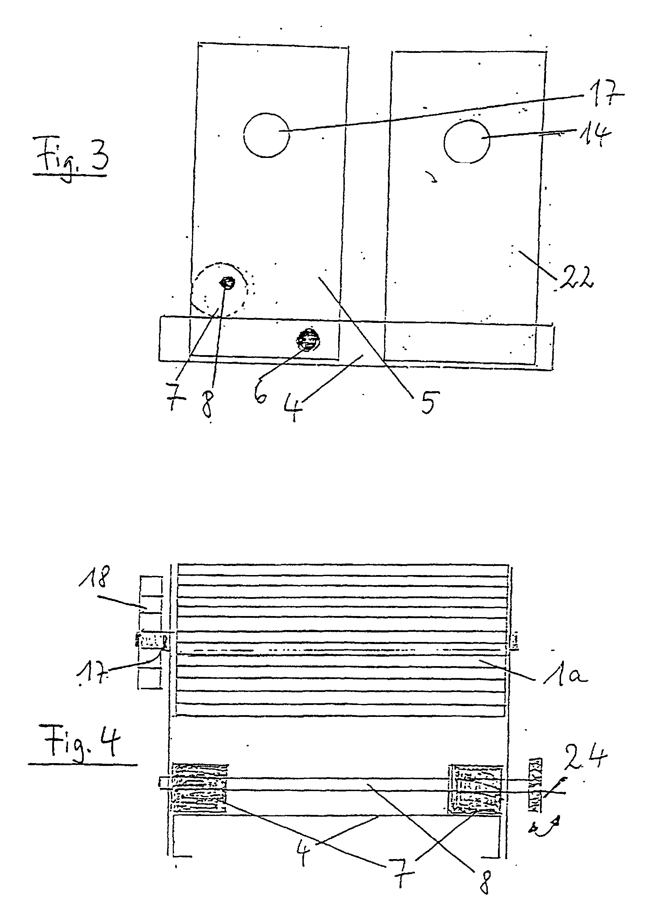

Fig. 3 eine Seitenansicht der erfindungsgemäßen Vorrichtung von der gegenüberliegenden Seite;

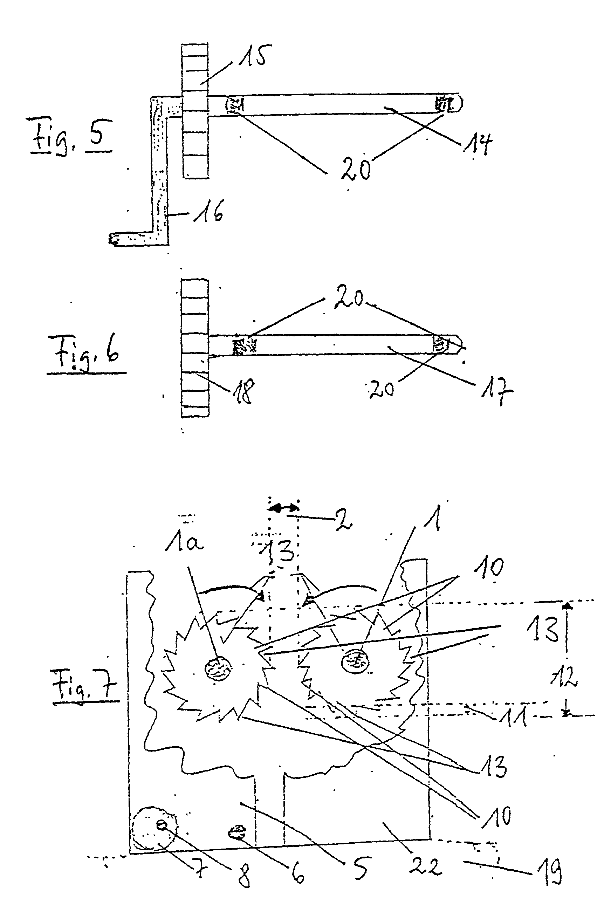

Fig. 4 eine Frontansicht der erfindungsgemäßen Vorrichtung;
Fig. 5 eine Draufsicht auf eine Kurbelwelle;
Fig. 6 eine Draufsicht auf eine Antriebswelle;
Fig. 7 eine Teilquerschnittsansicht der erfindungsgemäßen Vorrichtung; und

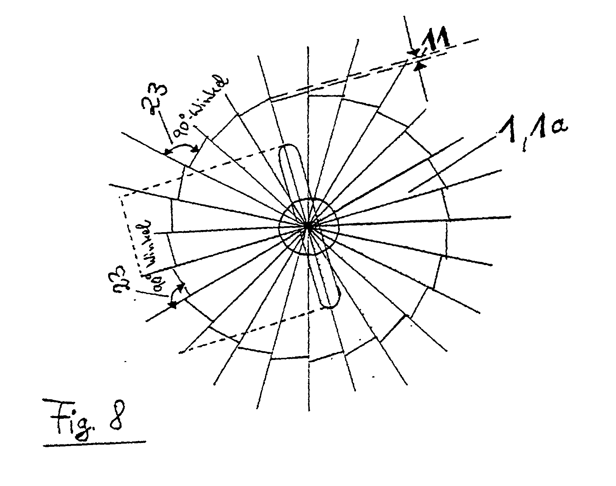

Fig. 8 einen Querschnitt durch eine erfindungsgemäße Fleischwalze.

Die Erfindung wird nun anhand einer bevorzugten Ausführungsform näher erläutert.

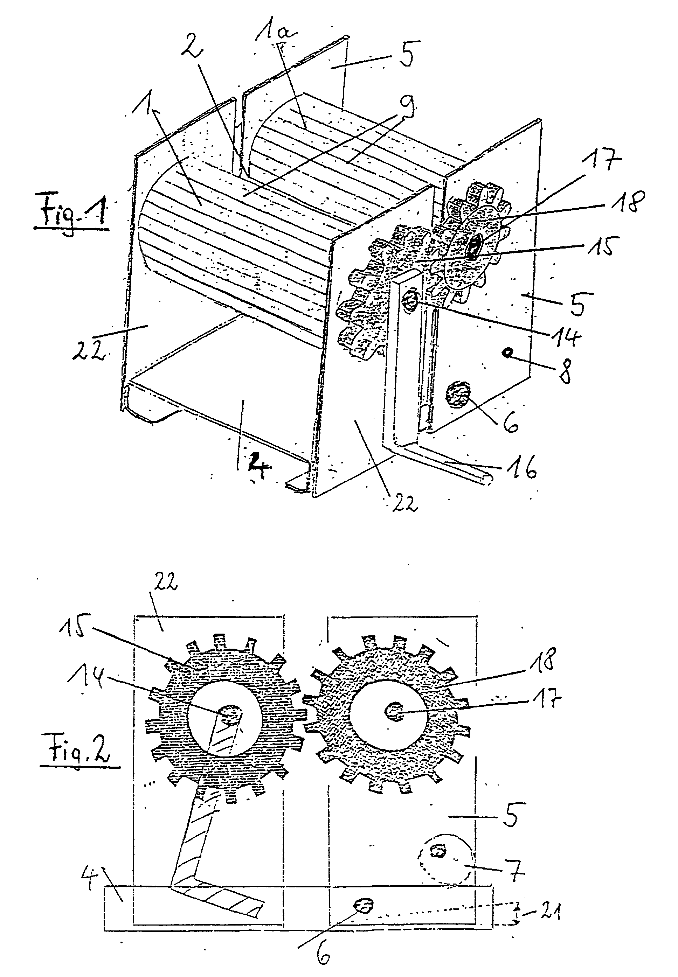

Gemäß Fig. 1 umfasst eine erfindungsgemäße Vorrichtung zwei parallel gegenüberliegende, gezahnte Walzen 1, 1a, wobei zwischen beiden Walzen ein verschieden breiter Walzenspalt 2 einstellbar ist. Der gewünschte Anpressdruck der Walzen auf das Frischfleisch wird durch eine Veränderung der Breite des Walzenspaltes 2 geregelt. Gegebenenfalls werden hierzu entsprechend Federungseinrichtungen verwendet.
Beide Walzen sind in den entsprechenden Seitenteilen beidseitig mit Gleitlagern gelagert 20. Ein Seitenteilpaar 22 ist an der Bodenplatte 4 starr fixiert. An diesem Seitenteilpaar 22, ist die feste Walze 1 gelagert. Die parallel zur festen Walze 1 angeordnete passive Walze 1a wird über die Walze 1 angetrieben. Ein Seitenteilpaar 5, zwischen dem sich die passive Walze 1a befindet, ist beweglich durch Lagerbolzen 6 an der Bodenplatte 4 befestigt.

Eine Höhenneigung 21 dieses gelagerten Seitenteilpaares 5 wird durch Exzenterwalzen 7 erreicht, welche an einer durchgehenden Welle 8 angebracht sind. Durch Drehen an einem seitlichen Sternrad 24 werden über die Exzenterwalzen 7 die Seitenteile 5 parallel in ihrer Höhenneigung 21 verändert. Dadurch wird der Walzenspalt 2 in seiner Breite verändert. Beide Walzen sind jeweils nur in Längsrichtung der Walze gezahnt 9. Die Zahnung 10 der Walzen verläuft entsprechend ihrer Drehrichtung 13 gleich. Als Zahntiefe 11 ist vertikal ein Standardmaß von 0,8 - 4 mm vorgesehen. Auch kleinere und größere Zahntiefen sind denkbar.
Ein Walzenzahn zum nächsten Walzenzahn 23 ergibt einen 90°-Winkel (plus oder minus 5° Abweichung). Die Zahnflächen können auch gewölbt sein, was durch eine entsprechende Form des Fräswerkzeugs für die Walze erreicht werden kann.

Die Walzenzähne 10 erfassen durch das gegenläufige Bewegen der Walzen das zu bearbeitende Frischfleisch und bewegen es, gleichsam der Wirkung einer Harpune, sicher in den Walzenspalt 2. Dadurch wird der Einzug des Walzgutes problemlos ermöglicht. Die Anzahl der Walzenzähne pro Walze ist abhängig vom jeweils gewählten Walzendurchmesser. Bei z. B. 10cm Walzendurchmesser 12 beträgt die Zahnmenge ca. 20 - 25 Stück. Beide Walzen werden beim Arbeitsvorgang zueinander gegenläufig bewegt 13. Die Walzenzähne schauen dabei gegeneinander 10. Durch die entsprechende Ausbildung der Walzenzähne und dadurch, dass die Walzenzähne nur in einer Richtung gezahnt sind 10, können sich Fleischstücke auch nicht festhängen und die Fleischstücke können sich auch nicht aufstauen. Damit ist auch eine effektive Oberflächenvergrößerung, des bearbeiteten Frischfleischs möglich, weil das Walzgut in den Rillen der Walzenzähne "auseinander fließen" kann. Bei diesem Walzvorgang wird das bearbeitete Frischfleisch durch den Walzenspalt 2 "durchgewalkt". Durch diesen Arbeitsvorgang wird die Struktur des Frischfleisches auch aufgelockert bzw. gemürbt. Der erfindungsgemäße Vorteil der Vorrichtung ergibt sich insbesondere durch die spezielle Ausführung der Walzenform 1, 1a, 9, 10, 11, 13, 23.

Die Achse 14 der fixen Walze 1 besitzt an der einer Außenseite der Seitenwand ein Antriebszahnrad 15. Über eine Verbindung/Zwischenstück von dem Antriebszahnrad 15 zu dem eigentlichem Antrieb wird die Vorrichtung angetrieben. Der Antrieb kann sowohl mechanisch, z. B. mit einer Kurbel 16, oder auch elektrisch erfolgen.

Auf der Achse 17 der passiven Walze 1a sitzt an der selben Außenseite der Seitenwand 5 der Vorrichtung ebenfalls ein Zahnrad 18, welches vom Antriebszahnrad angetrieben wird. Der Bewegungsverlauf beider Zahnräder ist dadurch in der Drehrichtung gegenläufig. Die Gesamtvorrichtung wird am Unterboden 19 befestigt, z. B. über Saugnäpfe, Klemmen, Schrauben und ähnliches Befestigungsmaterial.

Sämtliche verwendeten Materialien, aus welchen die Vorrichtung konstruiert ist, bestehen aus lebensmitteltauglichen Materialien. Die Vorrichtung lässt sich leicht demontieren und reinigen.

## Patentansprüche

1. Fleischwalze (1, 1a) mit
einem Walzenmantel in der Form eines Zylinders und
einer Vielzahl an Walzenzähnen (10) auf der Oberfläche des Walzenmantels, die sich im wesentlichen längs der Achse des Zylinders erstrecken,
**dadurch gekennzeichnet, dass**
jeder der Vielzahl an Walzenzähnen (10) jeweils eine erste Fläche, die im wesentlichen auf einer Ebene durch die Achse des Zylinders liegt, und eine zweite Fläche, die im wesentlichen senkrecht (23) zu einer ersten Fläche eines in Umfangsrichtung benachbarten Walzenzahns angeordnet ist, aufweist.

2. Fleischwalze nach Anspruch 1, wobei die Vielzahl an Walzenzähnen (10) gleichmäßig am Umfang des Walzenmantels mit oder ohne Zwischenraum angeordnet ist.

3. Fleischwalze nach Anspruch 1 oder 2, wobei sich die Walzenzähne (10) über die gesamte Mantellänge oder lediglich einen Teil davon erstrecken und die Walzenzähne vorzugsweise einteilig mit dem Walzenkörper sind.

4. Fleischwalze nach Anspruch 1, 2 oder 3, wobei die Höhe (11) der Walzenzähne in radialer Richtung des Zylinders im Bereich von 0,8 bis 4 mm liegt.

5. Vorrichtung zum Bearbeiten von Fleischstücken mit mindestens einer Fleischwalze (1, 1a) nach einem der Ansprüche 1 bis 4.

6. Vorrichtung nach Anspruch 5 mit mindestens einem Paar an Fleischwalzen (1, 1a), die im wesentlichen parallel nebeneinander unter Bildung eines Walzenspalts (2) angeordnet und gegenläufig drehbar sind.

7. Vorrichtung nach Anspruch 6, wobei die Fleischwalzen (1, 1a) des mindestens einen Paars an Fleischwalzen hinsichtlich der Walzenzähne (10) im wesentlichen identisch und antiparallel angeordnet sind.

8. Vorrichtung nach einem der Ansprüche 5 bis 7, wobei der Anpressdruck der Walzen (1, 1a) bzw. Walzenzähne (10) auf das zu bearbeitende Fleisch durch Veränderung des Höhenwinkels (21) eines beweglichen Seitenteils (5), in dem eine der Walzen gelagert ist, mittels eines drehbar gelagerten Exzenters (7) regelbar ist.

9. Vorrichtung nach einem der Ansprüche 6 bis 8, wobei jeweils mehrere Fleischwalzen auf jeder Achse des mindestens einen Walzenpaars angeordnet sind und/oder wobei mehrere Walzenpaare derart angeordnet sind, dass ein Fleischstück bei seiner Bearbeitung die mehreren Walzenpaare durchläuft.

10. Vorrichtung nach einem der Ansprüche 6 bis 9, wobei die Walzen durch ein Getriebe untereinander verbunden sind.

## Claims

1. Meat roller (1, 1a) comprising
a roller shell in the form of a cylinder, and
a plurality of roller teeth (10) on the surface of the roller shell, which extend substantially along the axis of the cylinder,
**characterized in that**
each one of the plurality of roller teeth (10) respectively has a first surface substantially lying on a plane through the axis of the cylinder, and a second surface disposed substantially perpendicularly (23) to a first surface of a roller tooth adjacent in circumferential direction.

2. Meat roller according to claim 1, wherein the plurality of roller teeth (10) are disposed uniformly at the circumference of the roller shell with or without spacing.

3. Meat roller according to claim 1 or 2, wherein the roller teeth (10) extend over the entire shell length or only a part thereof, and the roller teeth are preferably integral with the roller body.

4. Meat roller according to claim 1, 2 or 3, wherein the height (11) of the roller teeth is in the range of 0.8 to 4 mm in radial direction of the cylinder.

5. Device for processing pieces of meat including at least one meat roller (1, 1a) according to any one of claims 1 to 4.

6. Device according to claim 5, including at least one pair of meat rollers (1, 1a) disposed substantially parallel side-by-side with formation of a roller gap (2) and being countercurrently rotatable.

7. Device according to claim 6, wherein the meat rollers (1, 1a) of the at least one pair of meat rollers are substantially identical and disposed antiparallel with respect to the roller teeth (10).

8. Device according to any one of claims 5 to 7, wherein the contact pressure of the rollers (1, 1a) or roller teeth (10), respectively, on the meat to be processed is controllable by changing the azimuth angle (21) of a movable side portion (5), in which one of the rollers is supported, by means of a pivoted cam (7).

9. Device according to any one of claims 6 to 8, wherein plural meat rollers are respectively disposed on each axis of the at least one roller pair and/or wherein plural roller pairs are disposed such that a piece of meat passes the plural roller pairs during its processing.

10. Device according to any one of claims 6 to 9, wherein the rollers are connected to each other by means of a gear.

## Revendications

1. Rouleau de traitement de viande (1, 1a), comprenant:
une enveloppe de rouleau sous forme d'un cylindre et
une multitude de dents (10) de rouleau prévus sur la surface de l'enveloppe de rouleau s'étendant sensiblement longitudinalement à l'axe du cylindre,
**caractérisé en ce que**
chacune de la multitude de dents (10) de rouleau comprend respectivement une première surface située sensiblement sur un plan traversant l'axe du cylindre et une seconde surface située sensiblement verticalement (23) par rapport à une première surface d'une dent adjacente en direction circonférentielle.

2. Rouleau de traitement de viande selon la revendication 1, dans lequel la multitude de dents (10) de rouleau est disposée régulièrement sur le pourtour de l'enveloppe de rouleau avec ou sans intervalle.

3. Rouleau de traitement de viande selon la revendication 1 ou 2, dans lequel les dents (10) de rouleau s'étendent sur la longueur d'enveloppe entière ou sur une partie de celle-ci seulement, les dents de rouleau étant de préférence prévues sous forme monobloc avec le corps du rouleau.

4. Rouleau de traitement de viande selon la revendication 1, 2 ou 3, dans lequel la hauteur (11) des dents de rouleau en direction axiale du cylindre est comprise entre 0,8 et 4 mm.

5. Dispositif de traitement de morceaux de viande comprenant au moins un rouleau de traitement de viande (1, 1a) selon l'une des revendications 1 à 4.

6. Dispositif selon la revendication 5 comprenant au moins une paire de rouleaux de traitement de viande (1, 1a) juxtaposées sensiblement parallèlement les unes par rapport aux autres, en formant un interstice de rouleaux (2), et rotatives à mouvement contraire.

7. Dispositif selon la revendication 6, dans lequel les rouleaux de traitement de viande (1, 1a) de l'une paire au moins de rouleaux de traitement de viande sont disposés de manière sensiblement identique et antiparallèle en ce qui concerne les dents (10) de rouleau.

8. Dispositif selon l'une des revendications 5 à 7, dans lequel la force de serrage des rouleaux (1, 1a) respectivement des dents (10) de rouleau exercée sur la viande à traiter est réglable en variant l'angle d'hauteur (21) d'un élément latéral mobile (5) dans lequel est logé l'un des rouleaux, grâce à un excentrique (7) logé de façon rotative.

9. Dispositif selon l'une des revendications 6 à 8, dans lequel plusieurs rouleaux de traitement de viande sont disposées chacun sur chaque axe de l'une paire au moins de rouleaux et/ou dans lequel plusieurs paires de rouleaux sont disposées de façon qu'un morceau de viande parcourt la pluralité des paires de rouleaux durant son traitement.

10. Dispositif selon l'une des revendications 6 à 9, dans lequel les rouleaux sont associés l'un à l'autre par l'intermédiaire d'un réducteur.
